## Europäisches Patentamt
## European Patent Office
## Office européen des brevets

(19)

(11) Publication number: **0 119 372**
**A1**

(12)

# EUROPEAN PATENT APPLICATION

(21) Application number: 83850072.6

(22) Date of filing: 21.03.83

(51) Int. Cl.³: **B 65 G 13/00,** B 65 G 13/07, B 65 G 39/02

(43) Date of publication of application: 26.09.84
Bulletin 84/39

(84) Designated Contracting States: **DE FR GB IT**

(71) Applicant: **Svecia Silkscreen Maskiner AB,
Box 2090 Eriksberg Industriomrade, S-145 02 Norsborg
(SE)**

(72) Inventor: **Larson, Karl Georg, Fiskarhagsvägen 7,
S-145 90 Norsborg (SE)**

(74) Representative: **Lindbiom, Erik J., Caroline Östbergs
väg 5, S-122 35 Enskede (SE)**

(54) Conveying device using a number of rollers.

(57) Conveying device using a number of rollers intended
to transport rigid material (2) where an initial number of
rollers (3d) designed to convey the material is orientated for
interaction with one edge portion (2a) of the material whilst
a second number of rollers (4d) intended for conveyance of
the material is orientated for interaction with the other,
opposite edge portion (2b) of the material. The rigidity of the
material is preferably selected so that the material (2) can
be conveyed with support only at the edge portions. The
respective roller (3d) is arranged in such a way that its axis
of rotation (3d') forms a right angle or essentially a right
angle in respect of a plane (2c) assigned to a material (2)
and the respective roller (3d) also has an oblique surface
(17) functioning as supporting surface for an edge (2a')
which forms part of one (2a) and/or other edge portion of the
material (2).

TITLE:        Conveying device using a number of rollers

## TECHNICAL FIELD

The present invention relates to a conveying device and particularly
to such a conveying device which uses a number of rollers which are
intended to facilitate the conveyance of a rigid material.  An initial
number of rollers intended for conveyance of the material is orientated
for interaction with one edge portion of the material whilst a second
number of rollers intended for conveyance of the material is orientated
for interaction with the other, opposite edge portion of the material.
The rigidity of the material is preferably so selected that the material
can be conveyed with support, in the form of point support from the
rollers, only at the edge portions.

## BACKGROUND

Conveying devices of the type described above are previously known
in a variety of embodiments and a conveying device appertains to the
state of the art where a plurality of rollers are arranged on one and
the same axis and where the peripheral surface of the rollers functions
as a support for the material.  The axes of rotation of the rollers are
here orientated in parallel with a plane assigned to the material and
the direction of conveyance of the material.

Conveying devices are also already known where the rollers are
integrated into a roll stand and where the end portions of the respective
roll are given an outwardly-expanded conical shape so that by this means
the material can be centred to the centre portions of the rolls.

DESCRIPTION OF THE INVENTION

## TECHNICAL PROBLEM

Conveying devices of the type described above have given rise to problems during their operation. Thus it has proved difficult to convey material at high speeds, because at these high speeds the material exhibits an excessively strong tendency to oscillate between the end portions of the rolls.

It is a difficult technical problem to create a conveying device using a number of rollers which are so designed that they permit high conveying speeds for the material intended for conveyance.

It is a difficult technical problem to create a conveying device using a number of rollers which are so designed that the minimum possible portion of the material comes into contact with the conveying device, and particularly in the case when the material intended for conveyance has been surface-treated prior to reaching the conveying device it is a prerequisite that - in order not to destroy the surface treatment of the material - it should make the most limited contact possible with the actual conveying device.

It has furthermore proved to be a difficult technical problem to create a conveying device which is so designed that firstly different drive speeds can be assigned to it, but which above all can impart rapid acceleration and/or rapid retardation of speed to the material.

It is obvious that the acceleration and/or retardation problem becomes particularly difficult if the requirement is to be complied with that the conveying device should interact with the material to the least possible extent.

It has proved to be a difficult technical problem to create a roller which can be employed in a conveying device of the type described above, and which is so designed that on the one hand it can function as a guide for material, and secondly exhibit the advantage that, viewed practically, it needs to interact with the material only at one point.

Furthermore it has proved to be a difficult technical problem to drive the rollers with the aid of a drive belt and where power transmission between the drive belt and the roller takes place in a simple manner and where tensioning rollers can be provided for guiding the drive belt so that it interacts with all rollers, and where the tensioning rollers in addition ensure, by virtue of their location, that each roller exhibits a small contact angle in relation to the drive belt.

Furthermore it is a difficult technical problem to create conditions such that some rollers are driven by solely an initial drive motor and that some rollers are driven by solely a second drive motor, etc., so that by this means the drive motors can be driven mutually at different speeds.

### THE SOLUTION

The present invention now proposes a conveying device using a number of rollers where these rollers are intended to be able to convey rigid material and where an initial number of rollers designed to convey the material are orientated for interaction with one edge portion of the material whilst a second number of rollers designed to convey the material are orientated for interaction with the other, opposite edge portion, of the material.

The rigidity of the material should be so selected that the material can be conveyed with support solely at the edge portions. Nevertheless it is obvious that if the material rigidity is not sufficient to permit such conveyance, supporting rollers can be provided underneath the material.

With a view to solving the problems outlined above, the present invention proposes that the respective rollers be arranged in such a way that their axis of rotation forms a right angle or essentially a right angle in respect of a plane assigned to the material and that the respective roller should exhibit an oblique surface which functions as supporting surface for an edge which forms part of one and/or other edge portion of the material.

The invention proposes that the respective roller should have an upper cylindrical surface and a lower surface designed as a truncated cone and that the angle between the conical surface and the axis of rotation should be selected to be around 30°.

The invention proposes that all rollers should be driven by one and the same drive source by means of a single drive belt and that a number of tensioning rollers are provided to guide the drive belt for interaction with all rollers. By virtue of their location the tensioning rollers ensure that each roller exhibits a contact angle in relation to the drive belt. This contact angle can be narrow, but should preferably be selected so as to exceed 5°.

Furthermore it is proposed that some rollers should be driven by only an initial drive motor and other rollers should be driven by only a second drive motor, etc., by means of which different speeds can be assigned to the drive motors mutually, thus ensuring the possibility of obtaining rapid acceleration and/or retardation of the speed of the material.

With the intention of being able to convey material above certain rollers it is proposed that these be capable of being lowered underneath the material and furthermore that the axis of rotation for such lowering be orientated through the drive belt so as to ensure that the lowering or twisting downwards do not cause any change in the length of the drive belt.

## ADVANTAGES

The advantages which can be regarded as being linked with a conveying device using a number of rollers in accordance with the present invention are firstly that a high acceleration and/or retardation can be imparted to the material, whilst at the same time facilities are provided to convey material without large surface portions of the conveying device interacting with the material, in that here interaction takes place between drive rollers and the material only at points and particularly at an edge which forms part of one and/or other edge portion of the material.

The particular characteristic features of a conveying device in accordance with the present invention are outlined in the characteristic portion of patent claim 1 which follows.

## BRIEF DESCRIPTION OF DRAWINGS

A proposed embodiment of a conveying device using a number of rollers in accordance with the present invention will be described in greater detail by reference to the appended drawings where

Fig. 1    shows a horizontal view of the conveying device with a material intended for conveyance,

Fig. 2    shows on a somewhat enlarged scale a portion of the conveying device and

Fig. 3    shows a section III-III in Fig. 1.

## DESCRIPTION OF PROPOSED EMBODIMENTS

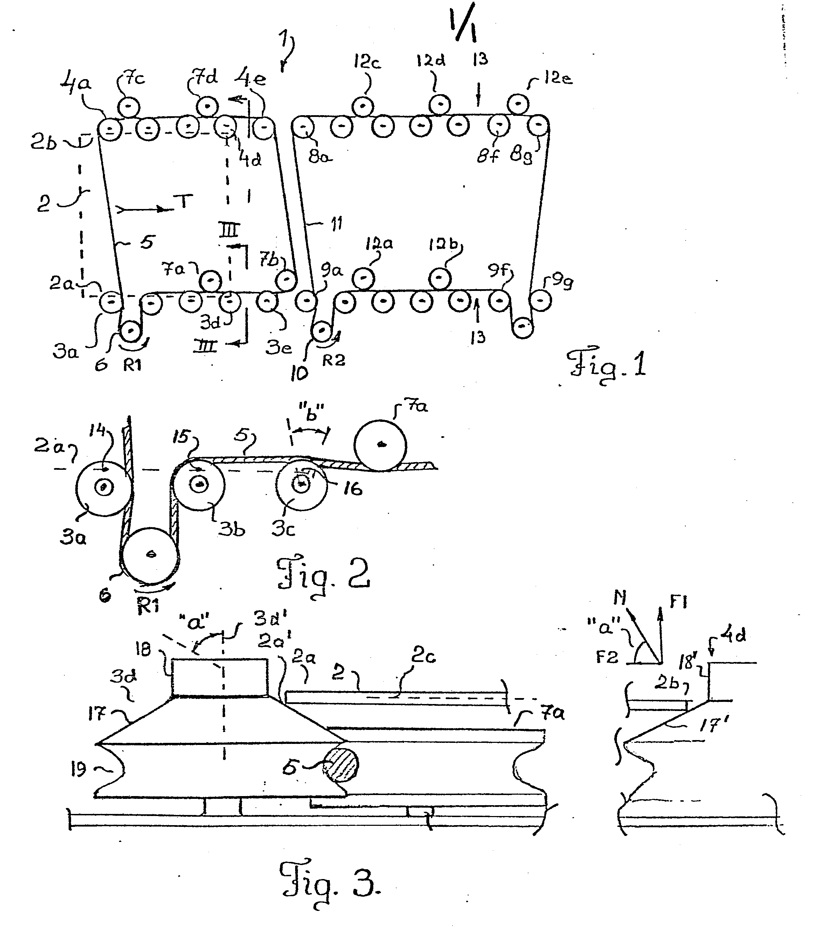

Thus Fig. 1 gives a horizontal view of a conveying device 1 in accordance with the present invention where the conveying device uses a number of drive rollers designed to convey a rigid material 2, indicated by dashed lines in Fig. 1. An initial number of rollers designed to convey the material, designated 3a.......3e, is orientated for interaction with one edge portion 2a of the material whilst a second number of rollers designed for conveying the material 2, designated 4a.......4e, is orientated for interaction with the other, opposite edge portion 2b of the material.

The rigidity of the material 2 is preferably so selected that the material 2 can be conveyed with support solely at the edge portions 2a and 2b. If however the material rigidity should be reduced, then naturally it should be possible to provide supporting rollers. The respective rollers 3a........3e and 4a........4e are arranged so that their axis of rotation forms a right angle or essentially a right angle in respect of a plane assigned to the material and the respective rollers exhibit an oblique surface which functions as supporting surface for an edge which forms part of one and/or other edge portion of the material.

The embodiment in accordance with Fig. 1 shows that a drive belt 5 is driven by a motor 6 in a rotational direction and at a speed designated "R1" and by this means the belt 5 assigns such a rotational direction and speed to all the rollers that the material 2 can be conveyed in the direction "T". As a result all rollers are driven by one and the same drive source 6 and by means of a single drive belt 5. A number of tensioning rollers 7a, 7b, 7c and 7d are provided to guide the drive belt 5 so that this interacts with all rollers. By virtue of their location the tensioning rollers 7a........7d ensure that each drive roller exhibits a contact angle in respect of the drive belt. This contact angle has been designated "b" in Fig. 2 and it is known that a functional conveying device is obtained even if the contact angle is small. For practical reasons however it is proposed that the contact angle be selected to exceed $5^{o}$.

Fig. 1 indicates however that some rollers 3a.......3e and 4a.......4e are driven by solely an initial drive motor 6 and that some rollers 8a.......8g and 9a.......9g are driven solely by a second drive motor 10, the latter having a rotational direction and speed indicated by the notation "R2". The drive motors 6 and 10 can with advantage be mutually driven at different speeds. Drive motor 10 drives a drive belt 11 which in a manner similar to drive belt 5 interacts with a number of tensioning rollers, designated as 12a, 12b, 12c, 12d and 12e.

By selecting the drive motors 6 and 10 so that they have mutually differing speeds, it has proved to be possible to impart rapid acceleration and/or retardation to the material 2 and even so retain the orientation of the material 2 in relation to the conveying device (for example, high speed for motor 6 and low speed for motor 10 during retardation).

Certain rollers, i.e. 8f, 8g and 9f, 9g together with the tensioning roller 12e can be made capable of being lowered or twisted downwards underneath the conveyance path for the material 2 so as not to interfere with conveyance of material across these rollers. In such cases it is proposed that the axis of rotation 13 be orientated through the drive belt 11 so that by this means the lowering does not cause any change in the length of the drive belt 11.

Fig. 2 shows on a somewhat enlarged scale a portion of the conveying device illustrated in Fig. 1. Fig. 2 is intended to illustrate that the edge portion 2a of the material rests only at certain points against the rollers 3a, 3b and 3c, the points being designated as 14, 15 and 16.

With reference to Fig. 3, one of the rollers is illustrated used in a conveying device in accordance with Fig. 1, i.e. the roller 3d. All rollers are identical and by this means the respective roller is so arranged that its axis of rotation 3d' forms a right angle or essentially a right angle in respect of a plane 2c assigned to the material 2. Furthermore the respective roller 3d has an oblique surface 17 which functions as supporting surface for an edge 2a' forming part of one 2a and/or other edge portion of the material 2.

Each roller has an upper cylindrical surface 18 and underlying surface 17 formed as a truncated cone, together with a groove underneath this 19 which is intended to interact with the drive belt 5.

Concerning the angle "a" between the conical surface 17 and the axis of rotation 3d' it can be mentioned, particularly with reference to the diagram of forces shown in conjunction with Fig. 3, that an angle "a" somewhat less than 90° will give a small normal force "N" and a small force component "F2". It is likely that an angle "a" just below 90° will not be capable of stabilising the material to the centre region between roller 3d and 4d. If on the other hand the angle "a" is made small, this certainly signifies that the normal force "N" will be large, but also that the force component "F2" will be large. The force component "F2" tends to make the material bend, which is undesirable. A high normal force is as such desirable, since this gives a greater frictional force. During the practical application of the present invention it is hence important that the angle "a" be selected to take into account the choice of material and other circumstances. Practical tests have indicated that the angle between the conical surface and the axis of rotation should be around 30° (20° – 45°).

The distance between roller 3d and roller 4d should be such that when the edge surface 2a of the material rests against the cylindrical surface 18, the edge surface 2b will continue to make contact with the surface 17' of roller 4d.

The advantage of orientating the axis of rotation 3d' in the manner proposed in the present invention is that the force which is transmitted from the drive rollers to the material 2 is directed solely in the direction of conveyance "T" and not at right angles thereto, so that centring of the material 2 between the surfaces 18 and 18' can occur even at high speeds.

The present description indicates that if prior to reaching the conveying device 1 the material 2 has been subjected to surface treatment, on one or both sides, the material can be conveyed by the conveying device without the treated surfaces being contacted.

The conveying device has proved to be particularly advantageous for the conveyance of cards having printed circuits.

Obviously the invention is not restricted to the embodiment described above by way of example but can be subjected to modifications within the framework of the following patent claims.

0119372

PATENT CLAIMS

1. Conveying device using a number of rollers intended to transport rigid materials (2) where an initial number of rollers (3d) intended for conveyance of the material is orientated for interaction with one edge portion (2a) of the material whilst a second number of rollers (4d) intended for conveyance of the material is orientated for interaction with the other, opposite edge portion (2b) of the material, where the rigidity of the material is preferably selected in such a way that the material (2) can be conveyed with support only at the edge portions, characterised in that the respective roller (3d) is arranged so that its axis of rotation (3d') forms a right angle or essentially a right angle in respect of a plane (2c) assigned to a material (2) and that the respective roller (3d) has an oblique surface (17) functioning as supporting surface for an edge (2a') which forms part of one and/or other edge portion of the material (2).

2. Conveying device as in patent claim 1 characterised in that the respective roller has an upper cylindrical surface (18) and a lower surface (17) designed as a truncated cone.

3. Conveying device as in patent claims 1 or 2 characterised in that the angle between the conical surface (17) and the axis of rotation (3a') it is selected to be around $30^\circ$.

4. Conveying device as in patent claim 1, characterised in that all rollers (3a-3e,4a-4e) are driven by one and the same drive source (6) by means of a single drive belt (5).

5. Conveying device as in patent claim 4, characterised in that a number of tensioning rollers (7a-7d) are provided for guiding the drive belt (5) to interact with all rollers.

6. Conveying device in accordance with patent claim 5, characterised in that the tensioning rollers, by virtue of their location, ensure that each roller exhibits a contact angle ("b") in relation to the drive belt (5) and that this contact angle is preferably selected to exceed $5^\circ$.

0119372

7. Conveying device in accordance with any of the preceding patent claims characterised in that some rollers are driven by only an initial drive motor (6) and some rollers are driven by only a second drive motor (10) etc.

8. Conveying device in accordance with patent claim 7 characterised in that the drive motors (6, 10) are mutually driven at different speeds (R1, R2).

9. Conveying device in accordance with any of the preceding patent claims characterised in that certain rollers can be lowered underneath the material so as not to impede conveyance of material above these rollers.

10. Conveying device in accordance with patent claim 9 characterised in that the axis of rotation is orientated through the drive belt.

0119372

1/1

Fig. 1

Fig. 2

Fig. 3.

0119372

European Patent
Office

**EUROPEAN SEARCH REPORT**

Application number

EP 83 85 0072

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 174 104 (GARVEY) <br> * Column 1, lines 39-50; column 3, lines 47-57; column 5, lines 42-51; column 6, lines 65-69; column 7, lines 1-19; figures 1,4,7,14,15 * | 1,2,4 | B 65 G 13/00 <br> B 65 G 13/07 <br> B 65 G 39/02 |
| | --- | | |
| X | US-A-4 275 809 (GARVEY) <br><br> * Column 2, lines 30-68; column 3, lines 1-24; figures 1-7 * | 1,2,4, 5,6 | |
| | --- | | |
| A | US-A-2 832 480 (BARSKI) <br> * Column 2, lines 58-72; column 3, lines 1-6; figures 1-3 * | 9 | |
| | ----- | | TECHNICAL FIELDS SEARCHED (Int. Cl. 3) |
| | | | B 65 G <br> H 05 K |

The present search report has been drawn up for all claims

| Place of search <br> THE HAGUE | Date of completion of the search <br> 09-11-1983 | Examiner <br> OSTYN T.J.M. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82